# EUROPEAN PATENT SPECIFICATION

(11) **EP 4 222 445 B1**
(45) Date of publication and mention of the grant of the patent: **10.07.2024**
(21) Application number: 21799181.9
(22) Date of filing: 27.09.2021
(51) Int. Cl.: G01B 5/20, G01B 5/207, G01B 3/14

(54) **METHOD OF INSPECTING A WIND TURBINE BLADE**
VERFAHREN ZUR INSPEKTION EINER WINDTURBINENSCHAUFEL
PROCÉDÉ D'INSPECTION DE PALE D'ÉOLIENNE

(30) Priority: 29.09.2020 DK PA202070661
(43) Date of publication of application: 09.08.2023
(73) Proprietor: VESTAS WIND SYSTEMS A/S, 8200 Aarhus N (DK)
(72) Inventor: SMITH, Jonathan, 8200 Aarhus N (DK); PRESTON, Robert Charles, 8200 Aarhus N (DK)
(74) Representative: Vestas Patents Department
(86) International application number: PCT/DK2021/050299
(87) International publication number: WO 2022/069010

(56) References cited:
- WO-A1-2021/148635
- CN-A- 109 696 106
- KR-A- 20120 132 804
- US-A- 5 471 995
- US-A1- 2016 349 037
- US-B1- 9 329 016

## Description

### TECHNICAL FIELD

The present invention relates generally to a method of inspecting a wind turbine blade and, in particular, to a method of inspecting a defect of the wind turbine blade.

### BACKGROUND

Modern wind turbines are being manufactured with rotor blades of ever-increasing size in order to increase the amount of energy that may be captured from the wind. The larger the blades, the greater the forces that the blades need to withstand in operation, such as blade bending moments at a root of the blades. As a consequence, the blades need to be manufactured using thicker laminates so that they can withstand such forces.

Defects on a wind turbine blade can occur for many reasons. For example, defects may arise due to the misalignment or movement of fibre plies or mats during the layup or infusion process of the blade shell. The infusion process can also result in resin rich areas or resin voids, which may also lead to defects in the shell structure. If a vacuum bag is used, this can become creased and form ridges on the laminate surface. The defects may take the form of wrinkles, ridges, depressions, voids or any other irregularity on the surface of a shell of the wind turbine blade. While they can occur at any location of the blade, they commonly appear at thicker and/or more curved parts of the blade, such as a transition from a relatively thick root portion to a relatively thin aerofoil portion of the blade. The scale of modern wind turbine blades can make the occurrence of defects during the manufacturing process more likely.

Defects on a wind turbine blade can cause stress concentrations, cracks, or other damage to the blade. In particular, if such defects are not identified during the manufacturing process then these may cause failure of the blade when the wind turbine is in service, necessitating expensive repairs or even complete replacement.

It is therefore important that defects are detected and repaired during the manufacturing process prior to assembly of the wind turbine. Nonetheless, only some defects may be problematic. For instance, larger defects may need to be repaired whereas smaller defects may be considered acceptable and within allowed tolerances. For reasons of time and expense, it is important that only those detected defects that are required to be repaired are indeed rejected and kept back for repair.

Some known methods for assessing defects are inefficient as they require the judgment of an engineer to determine whether a defect is within allowed tolerances. These methods can lead to inconsistencies between different engineers, can result in unnecessary repairs for defects that are incorrectly determined to be outside of the allowed tolerances, and can only be used to make a binary determination as to whether repair is needed without being able to provide more detailed information about the defect. Some other known methods for detecting and assessing defects are time consuming and require relatively expensive equipment, for instance to acquire and process sensor data associated with the blade.

WO2021/148635 describes a measuring device for characterising a shape of a surface of an item, such as a collection of fibre layers laid up for manufacturing a fibre-reinforced composite component, for instance for a wind turbine blade. CN109696106 describes a blade measuring device, and more particularly to a multi-point measuring structure for a blade.

It is against this background to which the present invention is set.

### SUMMARY OF THE INVENTION

According to an aspect of the present invention there is provided a method of inspecting a wind turbine blade in accordance with claim 1.

The method may comprise inspecting the contour described by the displaced pins to determine whether dimensions of the defect are within a permitted threshold.

Inspecting the contour described by the displaced pins may comprise visually inspecting said contour and transmitting data indicative of said contour from the defect inspection tool to an electronic device arranged to analyse the contour data.

The visual inspection scale may be a two-dimensional scale. Visually inspecting the contour described by the displaced pins may comprise using the two-dimensional scale to determine a ratio of height to width of said contour.

The two-dimensional scale may comprise a grid. Determining the ratio may comprise using the grid to determine the height and width of the contour described by the displaced pins.

The two-dimensional scale may comprise at least one two-dimensional block indicating a combination of height and width indicating a permitted threshold ratio. The method may comprise visually inspecting the contour described by the displaced pins relative to the at least one two-dimensional block to determine whether dimensions of the defect are within the permitted threshold ratio.

The two-dimensional scale may comprise a plurality of two-dimensional blocks each indicating a different combination of height and width indicating the permitted threshold ratio. Visually inspecting the contour described by the displaced pins may comprise selecting the two-dimensional block having a width closest to, but greater than, the width of said contour. The method may comprise inspecting the height of said contour relative to the height of said selected two-dimensional block to determine whether the dimensions of the defect are within the permitted threshold ratio.

The visual inspection scale may overlie the displaced pins. The visual inspection may comprise inspecting the contour described by the displaced pins through the visual inspection scale.

Positioning the defect inspection tool against the defect may comprise applying a first end of the array of pins to the wind turbine blade to span the defect to cause a second end of the array of pins, opposite to the first end, to provide the contour described by the displaced pins.

The defect may be at least one of a wrinkle, a crease, a fold, a ridge, and a groove.

The defect may be on the surface of a shell of the wind turbine blade.

A defect inspection tool for use on a wind turbine blade may have an array of pins, and the pins are arranged to displace in an axial direction relative to one another upon positioning the defect inspection tool against a defect on the wind turbine blade. The displaced pins describe a contour representative of a contour of the defect for use in determining dimensions of the defect.

The defect inspection tool may comprise a visual inspection scale arranged adjacent to, e.g. attached or coupled to, the array of pins to allow visual inspection of the contour described by the displaced pins against the visual inspection scale.

The visual inspection scale may comprise a grid. A width of each of the pins may be less than or equal to a width of a spacing of the grid.

### BRIEF DESCRIPTION OF THE DRAWINGS

Examples of the invention will now be described by way of example with reference to the accompanying drawings, in which:
Figure 1 is a schematic view of a wind turbine blade to be inspected according to the invention;
Figure 2 is a schematic sectional view of a defect on the wind turbine blade of Figure 1;
Figure 3 is a schematic view of a prior art tool for inspecting the wind turbine blade of Figure 1;
Figure 4 shows a schematic plot of results achieved when inspecting a defect on a wind turbine blade when using the prior art tool of Figure 3;
Figures 5(a) and 5(b) are schematic views of a defect inspection tool according to an example of the invention for inspecting the wind turbine blade of Figure 1; and,
Figure 6 summarises the steps of a method of inspecting the wind turbine blade of Figure 1 according to an example of the invention.

### DETAILED DESCRIPTION

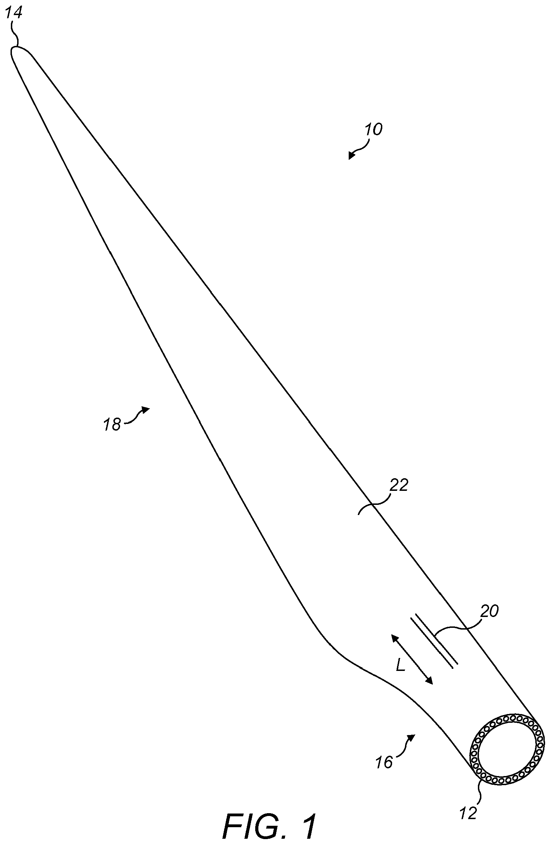

Figure 1 schematically illustrates a wind turbine rotor blade 10. The blade 10 has a root 12 for attaching to a rotor hub of a wind turbine, and a tip 14 at an opposite end of the blade from the root 12. A root portion 16 of the blade 10 adjacent to the root 12 is substantially circular in shape and is of relatively thick construction. A main portion 18 of the blade 10 extends between the root portion 16 and the tip 14, and the main portion 18 defines an aerofoil shape having a leading edge and a trailing edge. The tip 14 is of relatively thin construction, and the main portion 18 is generally of thinner construction than the root portion 16.

The blade 10 is shown in a pre-installed state, i.e. prior to being attached to a wind turbine rotor in a form suitable for operation of the wind turbine. In particular, the blade 10 is shown during, or at the end of, a manufacturing stage of the blade 10.

Figure 1 schematically illustrates a defect 20 on a surface of a shell of the blade 10. The defect 20 may be a result of an error during the manufacture of the blade 10. In particular, blade defects may be caused by laminate fibres becoming misaligned, for example due to incorrect placement of the fibres or due to movement of the fibres during the manufacturing process. If a resin infusion process is used to form the blade shell, this can result in resin rich areas or resin voids forming, which may also cause wrinkles, ridges or depressions to develop on the shell surface. In a vacuum-assisted infusion process where a vacuum bag is used, the vacuum bag may form creases than can also cause defects to develop on the shell surface.

In the described example, the defect 20 is in the form of a wrinkle. A length L of the wrinkle 20 is illustrated as extending generally in a direction between the root 12 and tip 14 of the blade 10; however, a length of the wrinkle may extend in different directions along the blade 10. In the illustrated example, the wrinkle 20 is located generally at a transition between the root and main portions 16, 18 of the blade. However, the wrinkle 20 may be located at various locations on the blade 10. In general, during manufacture, a defect may be more likely to occur at those regions of a blade that have more complex geometry, e.g. curved regions, and/or regions of the blade having a greater thickness.

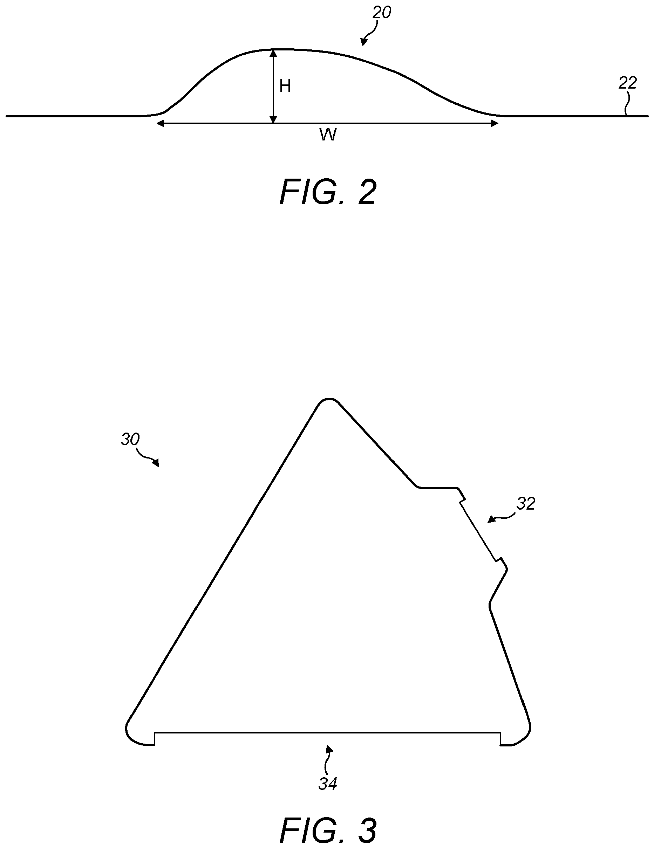

Figure 2 schematically illustrates a sectional view of the wrinkle 20 of the illustrated example. The wrinkle 20 may be regarded as an out-of-plane waviness of the surface 22 of the shell of the blade 10. The wrinkle 20 has a width W and a height H, with a maximum height at some point along its width. Figure 2 only illustrates the surface 22 of the blade 10; however, the defect 20 may be apparent through various fibre layers of the blade 10.

It is important that any detected blade defects are inspected prior to being transported from the manufacturing site to determine whether the defects are within allowable tolerances or thresholds for the blade. In particular, defects having certain dimensions at certain regions of the blade may be problematic in that they can cause stress concentrations, cracks, or other damage to the blade when the blade is in service as part of a fully-installed wind turbine. Each defect therefore needs to be inspected to determine whether: it is within allowable tolerances and as such does not need to be repaired prior to the blade being shipped from the manufacturing site; or, it is not within allowable tolerances and as such needs to be repaired before the blade can be shipped. However, it can be expensive to keep a wind turbine blade at a manufacturing site longer than is necessary, and so it is also important that those defects that are within acceptable thresholds are not returned for repair unnecessarily.

Figure 3 schematically illustrates a sectional view of a prior art tool or gauge 30 for inspecting a defect on a wind turbine blade. The tool 30 may be referred to as a 'go/no-go' gauge and it has two measurement apertures 32, 34. Each of the apertures 32, 34 allows inspection of a defect according to a different ratio of height to width, H/W, of the defect. In particular, a first one of the apertures 32 allows inspection according to a ratio of H/W=1/10, and the width of the aperture 32 in the illustrated example is 10mm. A second one of the apertures 34 allows inspection according to a ratio of H/W=2/50, and the width of the aperture 34 is 50mm.

The tool 30 may be used by receiving a defect, e.g. a wrinkle, into one of the apertures 32, 34, and an engineer then judges whether dimensions of the defect received into the aperture are within an allowable threshold or tolerance. For instance, a defect on a particular region of a blade having dimensions satisfying the ratio H/W<1/10 may be considered to be within an allowable threshold or tolerance. In order to inspect such defects using a tool or tools such as the one illustrated in Figure 3, it would be preferable that measurement apertures having different widths, but each satisfying the ratio of H/W=1/10, are made available to an engineer that is inspecting defects of different dimensions. For instance, it may be preferable that measurement apertures having respective widths of 10mm, 20mm, 30mm, 40mm, etc. are made available. However, it is often the case that only a limited number of such gauges with a limited number of measurement apertures are available in order to inspect blade defects. This means that an ncreaseed level of judgement may be needed from the engineer, increasing the likelihood of errors and inconsistencies.

If an engineer is restricted to using the prior art tool 30 illustrated in Figure 3, for example, to determine whether dimensions of one or more blade defects are within the threshold ratio H/W<1/10, then the measurement aperture 32 may be used relatively successfully for defects having a relatively small width. However, for defects with larger widths this determination may become more difficult as the aperture width is only 10mm. This means that the measurement aperture 34 may instead be used to inspect defects of greater width; however, as this aperture 34 allows for inspection according to a ratio (H/W=2/50) different from the threshold ratio (H/w=1/10) in this example, it is difficult for the engineer to judge whether such a defect is within the allowable threshold ratio.

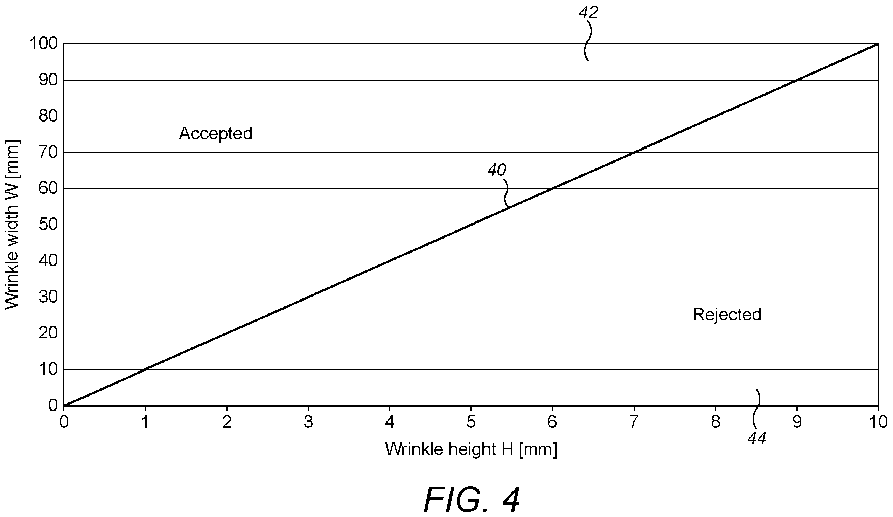

Figure 4 shows a graph of wrinkle height H against wrinkle width W, and in particular plots a line 40 satisfying the example threshold ratio H/W=1/10. The area 42 above the threshold ratio line 40 corresponds to H/W<1/10, meaning that any defect having dimensions corresponding to a point above the line 40 should be deemed to be acceptable, i.e. within allowable tolerances. In contrast, the area 44 below the threshold ratio line 40 corresponds to H/W>1/10, meaning that any defect having dimensions corresponding to a point below the line 40 should be Rejected, i.e. not within allowable tolerances and therefore needing to be repaired.

The prior art tool will reject all wrinkles with a height above 1mm (when using the aperture 32) and will reject all wrinkles with a height above 2mm (when using the aperture 34). However, as can be appreciated this can lead to the defect being incorrectly/unnecessarily rejected. That is, although defects having dimensions which may in theory be acceptable, assessments performed using current gauges such as the prior art tool 30 of Figure 3 may risk such defects being rejected. As such, the first and second measurement apertures 32, 34 of the tool 30 cannot be used, alone or in combination, to correctly and reliably determine which of a variety of different defects should be accepted as being within allowable tolerances, or rejected as being outside of said tolerances.

A large number of gauges having different widths for a given threshold ratio would be needed to allow more accurate inspection of a variety of different defects, which may not be practical. In any case, even if these were provided the determination as to whether dimensions of a defect are within a prescribed tolerance would still require a judgement on the part of an engineer - therefore risking inconsistencies in the results - and would still only provide a binary result as to whether the defect is to be accepted or rejected without further information as to its particular dimensions or geometry.

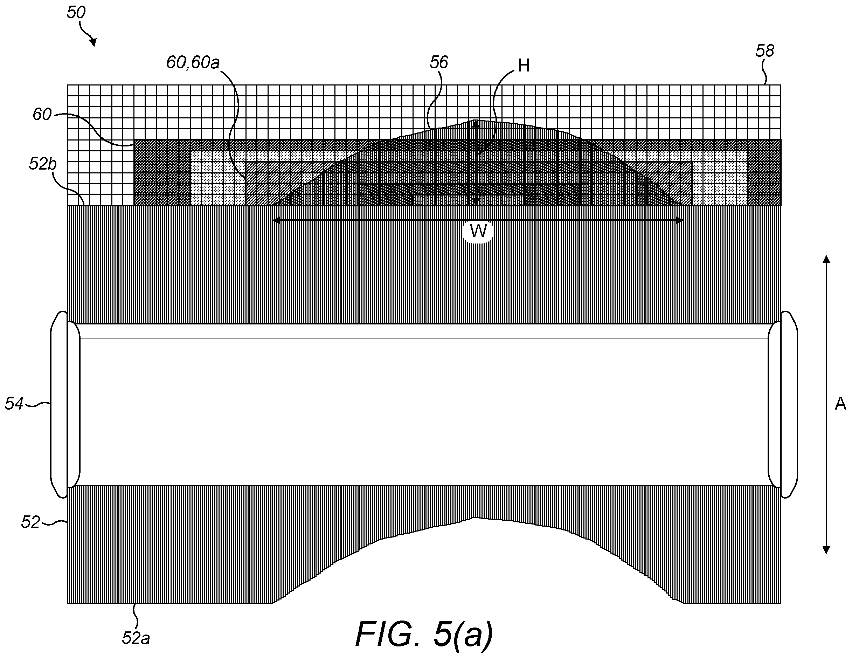

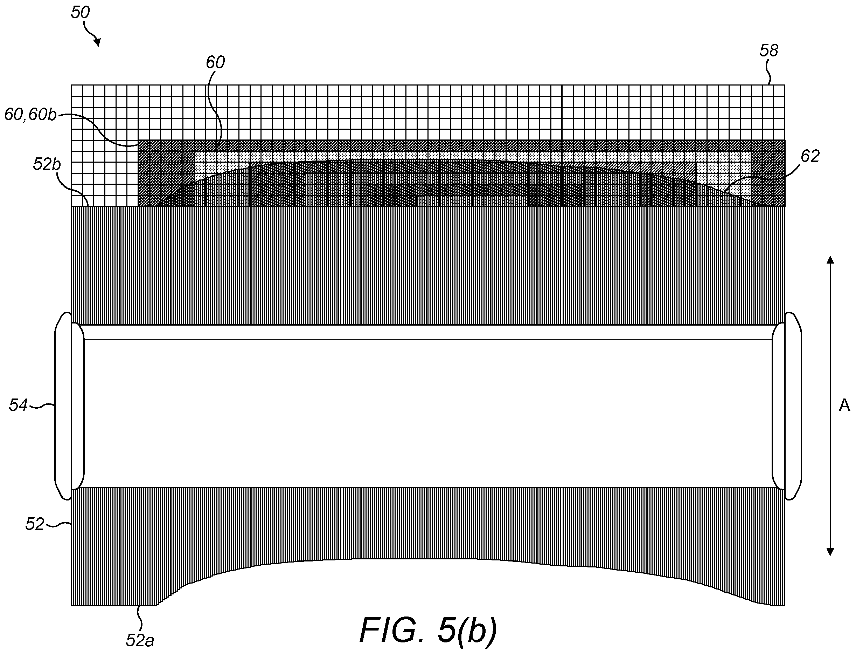

Figures 5(a) and 5(b) schematically illustrate a defect inspection tool or gauge 50 according to an example of the present invention that may be used to determine dimensions of a wind turbine blade defect more reliably. The tool 50 may also be referred to as a profile gauge or contour gauge. The tool 50 includes an array of pins 52 that are displaceable in an axial direction A relative to one another. The pins 52 may be arranged in a frame 54. The pins may be arranged relatively tightly against one another in the frame 54 that maintains the pins 52 parallel to one another in the axial direction A and in the same plane. Each of the plurality of pins 52 in the array may be of equal length (in the axial direction A) and may be of equal width. The pins may be formed from any suitable material, e.g. steel, plastic, etc.

The pins 52 are movable in the axial direction A relative to the frame 54 upon application of a force to the pins 52 in the axial direction A. For instance, a first end 52a of the array of pins 52 may be pressed against an object or a surface, causing the first end 52a to conform to a shape, outline, or contour of the object. As the pins 52 are of equal length then this causes a second end 52b of the array of pins 52, opposite to the first end 52a, to conform to a contour describing the contour of the object against which the first end 52a is pressed.

In the described example, the array of pins 52 is to be positioned or pressed against the defect 20 illustrated in Figures 1 and 2. In particular, the first end 52a of the pins 52 may be positioned to span the width W of the defect 20 so that the first end 52a conforms to the contour of the defect 20 along the blade surface 22 (as illustrated in Figure 2). In turn, this causes the second end 52b of the array of pins 52 to move such that it describes a contour 56 representative of the contour of the defect 20. The contour 56 described by the displaced pins 52 has a height H (in the axial direction A) and a width W, corresponding to that of the defect 20 along the surface 22 of the shell of the blade 10.

Figures 5(a) and 5(b) illustrate respective configurations or positions of the array of pins 52 when the defect inspection tool 50 has been positioned against a defect. In particular, Figure 5(a) illustrates the pins 52 when the defect inspection tool 50 has been positioned against the defect 20. The first end 52a of the pins 52 is positioned against the defect 20, in particular to span a width of the defect 20, such that the first end 52a conforms to a (sectional) shape of the defect 20. The axial movement of the pins 52 caused by positioning the tool 50 in this way in turn causes the second end 52b of the pins 52 to describe the contour 56 representative of the contour of the defect 20.

The tool 50 includes a visual inspection scale 58. In the described example the visual inspection scale 58 is arranged at or adjacent to the second end 52b of the array of pins 52. In particular, the visual inspection scale 58 is arranged relative to the pins 52 such that the contour 56 described by the displaced pins 52 may be visually inspected against the scale 58. In the example illustrated in Figure 5(a) the visual inspection scale 58 is substantially rectangular and has a width substantially equal to the width of the array of pins 52. For instance, the scale may allow for a magnitude of the displaced pins contour 56 in one or more dimensions to be inspected or measured.

The visual inspection scale 58 may overlie the contour 56 described by the displaced pins 52 to facilitate visual inspection of the displaced pins 52. In the described example, the visual inspection scale 58 may be formed from a clear or transparent material such that the contour 56 described by the displaced pins 52 may be viewed and inspected through the scale 58, as illustrated in Figure 5(a). Equally, the contour 56 may be viewed from the opposite side to that illustrated in Figure 5(a), i.e. with the displaced pins 52 in the foreground and the visual inspection scale 58 in the background. In such cases, the visual inspection scale need not be transparent as the contour 56 is visible in front of the scale 58.

The visual inspection scale 58 may include a two-dimensional scale. In the described example, the scale 58 allows for the width W of the contour 56 described by the displaced pins 52 to be inspected along a horizontal axis or x-axis, and allows for the height H of the contour 56 described by the displaced pins 52 to be inspected along a vertical axis or y-axis (in the axial direction A). The tool 50 may be used to inspect defects of any height and width; however, the tool 50 may be particularly useful for inspecting defects having a height and width less than the respective height and width of the two-dimensional scale.

Prior to displacement of the pins 52, i.e. prior to the tool 50 being positioned against the defect 20, the second end 52b of the pins 52 may be adjacent to, or line up against, an edge (or other part) of the visual inspection scale 58 corresponding to zero height. This may be referred to as a reset position of the tool 50. The pins 52 may return naturally to a reset or non-displaced position when not positioned or pressed against an object, for instance under gravity. Alternatively, the pins 52 may need to be returned to their non-displaced position by a user prior to the tool being used again.

The visual inspection scale 58 may include or indicate a two-dimensional grid. In the described example, the grid is formed by cells that are 1mm by 1mm; however, any suitable grid spacing, grating or resolution may be used. In the example illustrated in Figure 5(a), the grid is indicated as lines marked on the clear or transparent material from which the scale is formed. A width of each of the pins 52 may be less than or equal to a width of a spacing of the grid, i.e. 1mm in the illustrated example. Beneficially, this allows a determination of dimensions of a defect at least to within an accuracy provided by the grid spacing or grating.

The visual inspection scale 58 may include one or more two-dimensional blocks 60 each indicating a different combination of height and width indicating a permitted threshold ratio of height to width of a defect that is being inspected using the defect inspection tool 50. In the example illustrated in Figure 5(a), six two-dimensional blocks 60 are indicated on the visual inspection scale 58. Each of the blocks 60 may be indicated on the scale 58 by shading or by colour, e.g. a different shading or colour from the other blocks 60, or at least a different shading or colour relative to an adjacent block. However, the blocks may be indicated visually on the visual inspection scale in any suitable manner.

In the described example a threshold or permitted ratio of height to width of a blade defect to be inspected is H/W=1/10. Figure 5(a) illustrate the blocks 60 as rectangular blocks 60 having dimensions satisfying the threshold ratio, but with each of the blocks 60 having a different width (and therefore height) from one another. In this particular example, the blocks 60 have dimensions H/W=1/10, 2/20, 3/30, 4/40, 5/50, 6/60. It will be appreciated that any suitable number of blocks may be used indicating any suitable or desired threshold ratio.

In the described example, the plurality of blocks 60 are illustrated as overlying one another, with each block 60 having its lower edge extending along the H=0 horizontal axis, and each block being centred in a horizontal direction at the same position, in particular at W=37mm in Figure 5(a). In the illustrated example, the two-dimensional blocks 60 are in the form of 'cut-out' blocks, where for a given block 60 the adjacent, smaller block is visible inside the given block 60 such that only an outer part or section of the given block 60 is visible. As illustrated in Figure 5(a), the contour 56 described by the displaced pins 52 may be viewed through or against the threshold ratio blocks 60. A threshold ratio need not be indicated by coloured or shaded blocks, but can be indicated on the visual inspection scale in any suitable manner, for instance an indication of an outline or the boundaries of threshold dimensions for one or more examples of each of one or more threshold ratios.

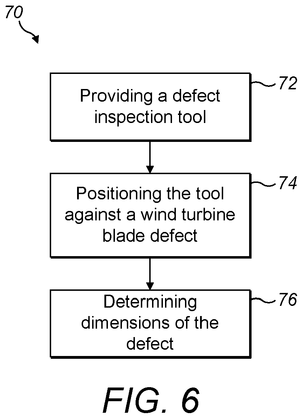

Figure 6 summarises the steps of a method 70 of inspecting the wind turbine blade 10. In particular, Figure 6 summarises the steps involved in inspecting the defect 20 on the blade 10 using the defect inspection tool 50. At step 72, the defect inspection tool 50 is provided, the tool 50 having the array of pins 52 that are displaceable in the axial direction A relative to one another.

At step 74, the defect inspection tool 50 is positioned, placed or pressed against the defect 20 on the wind turbine blade 10 to cause displacement of at least some of the pins 52 in the axial direction A. The displaced pins 52 describe a contour 56 representative of a contour of the defect 20.

At step 76, dimensions of the defect 20 are then determined by inspecting the contour 56 described by the displaced pins 52. Determining the dimensions of the defect may involve an inspection of the displaced pins 52 sufficient to determine whether the dimensions are within permitted threshold dimensions. This may or may not involve determining actual dimensions in one or more directions of the defect 20. The permitted threshold dimensions may be a maximum threshold value of one or more dimensions of the defect or may be a threshold ratio of certain dimensions of the defect.

Given the three-dimensional nature of defects on the surface of a wind turbine blade, it is difficult to directly measure or determine dimensions of such defects. However, by using the tool 50 to obtain the contour 56 representative of the shape of the defect 20, dimensions of the defect may be determined more readily. For instance, the two-dimensional contour 56 may be inspected visually to determine dimensions of the defect. In one example, an engineer may be able to judge whether dimensions of the defect are acceptable or not, i.e. within allowable tolerances, more accurately by inspecting/viewing the two-dimensional contour 56 described by the displaced pins 52 compared to inspecting the defect 20 directly (with or without another tool, such as the above-described prior art tool 30).

In an example, an engineer may use a separate measuring device, e.g. a simple straight-edged ruler, to measure dimensions (height and width) of the contour 56 described by the displaced pins 52 in order to determine the dimensions of the defect 20. It is clear that such a measuring device could not be used to accurately measure dimensions of the (three-dimensional) defect 20 directly.

As described above with reference to Figure 5(a), the defect inspection tool 50 includes a visual inspection scale 58, for instance that is attached or coupled to the pins 52 and/or frame 54. I contour 56 described by the displaced pins 52 is visually inspected against the visual inspection scale 58 to determine the dimensions of the defect 20. The provision of the visual inspection scale 58 as part of the defect inspection tool 50, and attached at a desired position relative to the pins 52, means that the displaced pins contour 56 may be readily and accurately inspected without the need for additional tools or devices.

In an example in which the visual inspection scale 58 is a two-dimensional scale, e.g. as illustrated in Figure 5(a), the contour 56 described by the displaced pins 52 may be visually inspected using the two-dimensional scale to determine one or both of a height H and width W of the contour 56, and therefore of the defect 20. In turn, this means that a ratio of height H to width W of the displaced pins contour 56, and therefore of the defect 20, may be determined. The provision of such a two-dimensional scale therefore allows for a greater amount of information about a defect, i.e. actual dimensions of the defect, to be readily acquired compared with prior art tools that may only provide for a determination as to whether the dimensions of the defect in one or more directions satisfy a prescribed threshold or tolerance.

As described above with reference to Figure 5(a), the two-dimensional scale may be represented by or include, a grid. In such an example, the grid may be used to read off the height H and width W of the contour 56 described by the displaced pins 52, which can then be used to determine the ratio H/W for instance. This provides a simple and accurate way in which to determine the dimensions of the defect 20 to a level of accuracy provided by the grid spacing or granularity, i.e. to the nearest 1mm for both height and width in the illustrated example.

Also as described above with reference to Figure 5(a), the visual inspection scale 58 may be provided with a feature that indicates a permitted or threshold ratio of defect dimensions. In particular, the visual inspection scale 58 may include at least one two-dimensional block indicating a combination of height and width providing the permitted threshold ratio. In such examples, the contour 56 described by the displaced pins 52 can be visually inspected relative to the at least one two-dimensional block 60 to determine whether the dimensions of the defect 20 are within the permitted threshold ratio. Beneficially, in this case an intermediate step of determining the height H and width W of the contour 56 is not needed in order to determine whether the ratio H/W is within the permitted threshold ratio, and so a determination of whether the defect 20 needs to be repaired may be more quickly and easily determined by inspection.

In an example in which a plurality of the two-dimensional blocks 60 are indicated on the visual inspection scale 58, it is first determined which of the blocks to use for comparison of the displaced pins contour 56 relative to the permitted threshold ratio. With reference to the example illustrated in Figure 5(a), the visual inspection may first involve selecting or assessing which of the two-dimensional blocks 60 has a width closest to, but greater than, the width W of the contour 56 described by the displaced pins 52. As may be seen in Figure 5(a), in the illustrated example the block 60a is the (first) selected block. Note that the tool 50 may be placed against the defect such that the contour 56 is positioned substantially centrally against the visual inspection scale 58. The visual inspection then includes inspecting the height H of the displaced pins contour 56 relative to the height of the (first) selected two-dimensional block 60a to determine whether the dimensions of the defect 20 are within the permitted threshold ratio. Specifically, if a maximum height of the displaced pins contour 56 is greater than the height of the selected block 60a then the defect 20 should be rejected as not being within the permitted threshold ratio. On the other hand, if the maximum height of the displaced pins contour 56 is less than the height of the selected block 60a then the defect 20 should be deemed to be acceptable as it is within the permitted threshold ratio. Therefore, in the example of Figure 5(a), as the maximum height of the contour 56 is greater than that of the selected block 60a, then the defect 20 is determined to exceed the permitted threshold ratio, meaning that the defect 20 needs to be repaired prior to completion of the manufacturing stage.

Figure 5(b) corresponds to Figure 5(a) except that Figure 5(b) illustrates an example of a contour 62 that may be described by the array of pins 52 when the defect inspection tool 50 is positioned against a defect other than the defect 20 having different dimensions. As may be seen in Figure 5(b), for such a displaced pins contour 62 the block to be selected as the one having a width closest to, but greater than, the width W of the contour 62 is in this case the second selected block 60b. As the maximum height of the contour 62 is less than that of the selected block 60b, then a defect that produces the contour 62 is determined to be within the permitted threshold ratio, meaning that such a defect may be considered to be acceptable without needing to be repaired.

In Figures 5(a) and 5(b), the permitted threshold ratio blocks 60 increment in height by 1mm from one block to the next, i.e. the heights of the blocks 60 are 1mm, 2mm, 3mm, 4mm, 5mm and 6mm, and each satisfy the predetermined or prescribed permitted threshold ratio of H/W=1/10. This means that a determination as to whether a defect is within the permitted threshold ratio can beneficially be made to within an accuracy of 1mm in height without needing to determine exact dimensions of the displaced pins contour. It will be understood that any suitable number of blocks, with any suitable spacing in height and/or width between successive blocks, may be used in order to make determinations to a desired accuracy.

As described above with reference to Figures 5(a) and 5(b), the visual inspection scale 58 may overlie the displaced pins 52. In particular, the visual inspection scale 58 may be formed from a material such that the displaced pins contour 56, 62 is visible through the scale 58. In such an example, the displaced pins 52 may be visually inspected against (in particular, through) the visual inspection scale 58. Beneficially, this allows a clear view of the visual inspection scale 58 to be maintained while inspecting the described pins contour 56, 62 relative to the scale 58. It also means that the described pins contour 56, 62 may be inspected from either side of the visual inspection scale 58, which offers flexibility that may be useful for inspecting defects in different locations on a blade.

Many modifications may be made to the above-described examples without departing from the scope of the present invention as defined in the accompanying claims.

Although the illustrated defect in the described example is a wrinkle, various different blade defects may occur which can be inspected using the tool and method described above. For instance, the defect may be in the form of a crease, a fold, a ridge, a groove, or any other defect that may suitably be inspected according to the described invention.

In the above-described example, determination of the dimensions is performed by visual inspection of the contour described by the displaced pins with the visual inspection scale. In an example the defect inspection tool may be arranged to transmit data indicative of the displacement of the pins when the tool is positioned against a defect. In particular, data indicative of a degree of displacement of each of the pins - which itself is indicative of the displaced pins contour- may be transmitted to an electronic device. The electronic device may then be arranged to analyse the received data to determine dimensions of the contour formed by the displaced pins and, by extension, dimensions of the defect under consideration. An automatic determination of whether the dimensions of the defect are within allowable tolerance levels may then be performed by the electronic device. The data transmission could be any suitable wired or wireless data transmission.

The defect inspection tool and method of the invention may be used to detect defects on the surface of a blade shell by positioning the tool at various locations along the blade and inspecting the contours described by the displaced pins at these various locations. However, it may be that the defects of particular interest for the present purposes may be identified by visual inspection of the blade, and then the defect inspection tool and method of the invention may advantageously be used to determine dimensions of the visually-identified defects.

Examples of the invention are advantageous in that it provides a relatively simple and inexpensive tool that can easily be used to perform the described method by engineers who do not necessarily need to be particularly experienced or trained to perform defect inspection, and does not rely on the judgement of such engineers to assess whether a defect is within prescribed tolerance.

Examples of the invention are advantageous in that they greatly reduce, or eliminate, 'false negatives', relative to prior art approaches, when assessing whether a defect should be rejected as not being within prescribed tolerances. That is, the number of defects that are judged as needing to be repaired when they are in fact within prescribed tolerances such that repair is unnecessary is greatly reduced. This leads to time and cost savings in the manufacturing stage of a wind turbine blade. In particular, sites at which wind turbine blades are manufactured often have a limited number of moulds in which the blades are manufactured, e.g. for reasons of expense, and as such the moulds commonly may be in near-constant use. Therefore, by reducing the number of unnecessary repairs that need to be performed on a blade while it is in a mould reduces the time a blade spends in the mould, the number of blades that may be manufactured over a time period is increased, thus providing the time and cost savings.

Examples of the invention are advantageous in that an assessment of different blade defects having a wide variety of dimensions may be made using a single tool and method. This is in contrast to prior art tools and methods, in which several different tools are needed to assess defects of different actual dimensions or different dimension ratios. This also contributes towards a time and cost saving for performing blade defect analysis.

Examples of the invention are advantageous in that variable data may be acquired; that is, measurements of actual dimensions of defects may be acquired with improved resolution or accuracy, and/or the particular form or shape of a defect may be recorded for further analysis, for instance away from the wind turbine blade. This is in contrast to some prior art approaches, in which only a binary determination as to whether a defect is within prescribed tolerances is possible.

## Claims

1. A method (70) of inspecting a wind turbine blade (10), the method (70) comprising:
providing (72) a defect inspection tool (50) having an array of pins (52), the pins (52) being displaceable in an axial direction (A) relative to one another, the defect inspection tool comprising a visual inspection scale (58);
positioning (74) the defect inspection tool (50) against a defect (20) on the wind turbine blade (10) to cause displacement of at least some of the pins (52) in the axial direction (A), the displaced pins (52) describing a contour (56) representative of a contour of the defect (20); and,
determining (76) dimensions of the defect (20) by inspecting the contour (56) described by the displaced pins (52), wherein inspecting the contour (56) described by the displaced pins (52) comprises visually inspecting said contour (56) against the visual inspection scale (58).

2. A method (70) according to Claim 1, comprising inspecting the contour (56) described by the displaced pins (52) to determine whether dimensions of the defect (20) are within a permitted threshold.

3. A method (70) according to Claim 1 or Claim 2, wherein inspecting the contour (56) described by the displaced pins (52) comprises visually inspecting said contour (56) and transmitting data indicative of said contour (56) from the defect inspection tool (50) to an electronic device arranged to analyse the contour data.

4. A method (70) according to Claim 1, wherein the visual inspection scale (58) is a two-dimensional scale, and wherein visually inspecting the contour (56) described by the displaced pins (52) comprises using the two-dimensional scale to determine a ratio of height (H) to width (W) of said contour (56).

5. A method (70) according to Claim 4, wherein the two-dimensional scale (58) comprises a grid, and wherein determining the ratio comprises using the grid to determine the height (H) and width (W) of the contour (56) described by the displaced pins (52).

6. A method (70) according to Claim 4 or Claim 5, wherein the two-dimensional scale (58) comprises at least one two-dimensional block (60) indicating a combination of height and width indicating a permitted threshold ratio, the method (70) comprising visually inspecting the contour (56) described by the displaced pins (52) relative to the at least one two-dimensional block (60) to determine whether the dimensions of the defect (20) are within the permitted threshold ratio.

7. A method (70) according to Claim 6, wherein the two-dimensional scale (58) comprises a plurality of two dimensional blocks (60) each indicating a different combination of height and width indicating the permitted threshold ratio, wherein visually inspecting the contour (56) described by the displaced pins (52) comprises selecting the two-dimensional block (60a) having a width closest to, but greater than, the width (W) of said contour (56), and comprises inspecting the height (H) of said contour (56) relative to the height of said selected two-dimensional block (60a) to determine whether the dimensions of the defect (20) are within the permitted threshold ratio.

8. A method (70) according to Claim 1, wherein the visual inspection scale (58) overlies the displaced pins (52), and wherein the visual inspection comprises inspecting the contour (56) described by the displaced pins (52) through the visual inspection scale (58).

9. A method (70) according to any previous claim, wherein positioning (74) the defect inspection tool (50) against the defect (20) comprises applying a first end (52a) of the array of pins (52) to the wind turbine blade (10) to span the defect (20) to cause a second end (52b) of the array of pins (52), opposite to the first end (52a), to provide the contour (56) described by the displaced pins (52).

10. A method (70) according to any previous claim, wherein the defect (20) is at least one of a wrinkle, a crease, a fold, a ridge, and a groove.

11. A method (70) according to any previous claim, wherein the defect (20) is on the surface (22) of a shell of the wind turbine blade (10).

## Patentansprüche

1. Verfahren (70) zum Inspizieren eines Windkraftanlagenblattes (10), wobei das Verfahren (70) Folgendes umfasst:
Bereitstellen (72) eines Defektinspektionswerkzeugs (50), das eine Anordnung von Stiften (52) aufweist, wobei die Stifte (52) in einer axialen Richtung (A) in Bezug zueinander verschiebbar sind, wobei das Defektinspektionswerkzeug eine visuelle Inspektionsskala (58) umfasst;
Positionieren (74) des Defektinspektionswerkzeugs (50) gegen einen Defekt (20) am Windkraftanlagenblatt (10), um eine Verschiebung mindestens einiger der Stifte (52) in der axialen Richtung (A) zu bewirken, wobei die verschobenen Stifte (52) eine Kontur (56) beschreiben, die repräsentativ für eine Kontur des Defekts (20) ist; und,
Bestimmen (76) der Abmessungen des Defekts (20) durch Inspizieren der durch die verschobenen Stifte (52) beschriebenen Kontur (56), wobei das Inspizieren der durch die verschobenen Stifte (52) beschriebenen Kontur (56) des visuelle Inspizieren der Kontur (56) im Vergleich zu der visuellen Inspektionsskala (58) umfasst.

2. Verfahren (70) nach Anspruch 1, umfassend das Inspizieren der durch die verschobenen Stifte (52) beschriebenen Kontur (56), um zu bestimmen, ob Abmessungen des Defekts (20) innerhalb eines zulässigen Schwellenwerts liegen.

3. Verfahren (70) nach Anspruch 1 oder Anspruch 2, wobei das Inspizieren der durch die verschobenen Stifte (52) beschriebenen Kontur (56) das visuelle Inspizieren der Kontur (56) und das Übertragen von Daten, die für die Kontur (56) anzeigend sind, aus dem Defektinspektionswerkzeug (50) an eine elektronische Vorrichtung zur Analyse der Konturdaten umfasst.

4. Verfahren (70) nach Anspruch 1, wobei die visuelle Inspektionsskala (58) eine zweidimensionale Skala ist und wobei das visuelle Inspizieren der durch die verschobenen Stifte (52) beschriebenen Kontur (56) das Verwenden der zweidimensionalen Skala umfasst, um ein Verhältnis von Höhe (H) zu Breite (W) der Kontur (56) zu bestimmen.

5. Verfahren (70) nach Anspruch 4, wobei die zweidimensionale Skala (58) ein Gitter umfasst, und wobei das Bestimmen des Verhältnisses das Verwenden des Gitters umfasst, um die Höhe (H) und die Breite (W) der durch die verschobenen Stifte (52) beschriebenen Kontur (56) zu bestimmen.

6. Verfahren (70) nach Anspruch 4 oder Anspruch 5, wobei die zweidimensionale Skala (58) mindestens einen zweidimensionalen Block (60) umfasst, der eine Kombination aus Höhe und Breite angibt, die ein zulässiges Schwellenwertverhältnis angibt, wobei das Verfahren (70) das visuelle Inspizieren der durch die verschobenen Stifte (52) beschriebenen Kontur (56) in Bezug zu dem mindestens einen zweidimensionalen Block (60) umfasst, um zu bestimmen, ob die Abmessungen des Defekts (20) innerhalb des zulässigen Schwellenwertverhältnisses liegen.

7. Verfahren (70) nach Anspruch 6, wobei die zweidimensionale Skala (58) eine Vielzahl von zweidimensionalen Blöcken (60) umfasst, von denen jeder eine unterschiedliche Kombination aus Höhe und Breite angibt, die das zulässige Schwellenwertverhältnis angibt, wobei das visuelle Inspizieren der durch die verschobenen Stifte (52) beschriebenen Kontur (56) das Auswählen des zweidimensionalen Blocks (60a) umfasst, der eine Breite aufweist, die der Breite (W) der Kontur (56) am nächsten kommt, aber größer als diese ist, und das Inspizieren der Höhe (H) der Kontur (56) in Bezug zur Höhe des ausgewählten zweidimensionalen Blocks (60a) umfasst, um zu bestimmen, ob die Abmessungen des Defekts (20) innerhalb des zulässigen Schwellenverhältnisses liegen.

8. Verfahren (70) nach Anspruch 1, wobei die visuelle Inspektionsskala (58) über den verschobenen Stiften (52) liegt, und wobei die visuelle Inspektion das Inspizieren der durch die verschobenen Stifte (52) beschriebenen Kontur (56) durch die visuelle Inspektionsskala (58) umfasst.

9. Verfahren (70) nach einem vorstehenden Anspruch, wobei das Positionieren (74) des Defektinspektionswerkzeugs (50) gegen den Defekt (20) das Anwenden eines ersten Endes (52a) der Anordnung von Stiften (52) am Windkraftanlagenblatt (10) umfasst, um den Defekt (20) zu überspannen, um zu bewirken, dass ein zweites Ende (52b) der Anordnung von Stiften (52), gegenüber dem ersten Ende (52a), die durch die verschobenen Stifte (52) beschriebene Kontur (56) bereitstellt.

10. Verfahren (70) nach einem vorstehenden Anspruch, wobei der Defekt (20) mindestens eines von einer Furche, einer Falz, einer Falte, einem Grat und einer Rille ist.

11. Verfahren (70) nach einem vorstehenden Anspruch, wobei sich der Defekt (20) auf der Oberfläche (22) einer Schale des Windkraftanlagenblatts (10) befindet.

## Revendications

1. Procédé (70) d'inspection d'une pale d'éolienne (10), le procédé (70) comprenant :
la fourniture (72) d'un outil d'inspection de défaut (50) présentant un réseau de broches (52), les broches (52) pouvant être déplacées dans une direction axiale (A) les unes par rapport aux autres, l'outil d'inspection de défaut comprenant une échelle d'inspection visuelle (58) ;
le positionnement (74) de l'outil d'inspection de défaut (50) contre un défaut (20) sur la pale d'éolienne (10) de façon à provoquer le déplacement d'au moins certaines des broches (52) dans la direction axiale (A), les broches déplacées (52) décrivant un contour (56) représentatif d'un contour du défaut (20) ; et
la détermination (76) de dimensions du défaut (20) en inspectant le contour (56) décrit par les broches déplacées (52), dans lequel l'inspection du contour (56) décrit par les broches déplacées (52) comprend l'inspection visuelle dudit contour (56) par rapport à l'échelle d'inspection visuelle (58).

2. Procédé (70) selon la revendication 1, comprenant l'inspection du contour (56) décrit par les broches déplacées (52) pour déterminer si les dimensions du défaut (20) se situent dans les limites d'un seuil autorisé.

3. Procédé (70) selon la revendication 1 ou la revendication 2, dans lequel l'inspection du contour (56) décrit par les broches déplacées (52) comprend l'inspection visuelle dudit contour (56) et la transmission de données indiquant ledit contour (56) depuis l'outil d'inspection de défaut (50) à un dispositif électronique conçu pour analyser les données de contour.

4. Procédé (70) selon la revendication 1, dans lequel l'échelle d'inspection visuelle (58) est une échelle bidimensionnelle, et dans lequel l'inspection visuelle du contour (56) décrit par les broches déplacées (52) comprend l'utilisation de l'échelle bidimensionnelle pour déterminer un rapport de la hauteur (H) à la largeur (W) dudit contour (56).

5. Procédé (70) selon la revendication 4, dans lequel l'échelle bidimensionnelle (58) comprend une grille, et dans lequel la détermination du rapport comprend l'utilisation de la grille pour déterminer la hauteur (H) et la largeur (W) du contour (56) décrit par les broches déplacées (52).

6. Procédé (70) selon la revendication 4 ou la revendication 5, dans lequel l'échelle bidimensionnelle (58) comprend au moins un bloc bidimensionnel (60) indiquant une combinaison de hauteur et de largeur indiquant un rapport seuil autorisé, le procédé (70) comprenant l'inspection visuelle du contour (56) décrit par les broches déplacées (52) par rapport au au moins un bloc bidimensionnel (60) pour déterminer si les dimensions du défaut (20) se situent dans les limites du rapport seuil autorisé.

7. Procédé (70) selon la revendication 6, dans lequel l'échelle bidimensionnelle (58) comprend une pluralité de blocs bidimensionnels (60) indiquant chacun une combinaison différente de hauteur et de largeur indiquant le rapport seuil autorisé, dans lequel l'inspection visuelle du contour (56) décrit par les broches déplacées (52) comprend la sélection du bloc bidimensionnel (60a) présentant une largeur la plus proche, mais supérieure, de la largeur (W) dudit contour (56), et comprend l'inspection de la hauteur (H) dudit contour (56) par rapport à la hauteur dudit bloc bidimensionnel sélectionné (60a) pour déterminer si les dimensions du défaut (20) se situent dans les limites du rapport seuil autorisé.

8. Procédé (70) selon la revendication 1, dans lequel l'échelle d'inspection visuelle (58) est superposée aux broches déplacées (52), et dans lequel l'inspection visuelle comprend l'inspection du contour (56) décrit par les broches déplacées (52) par l'intermédiaire de l'échelle d'inspection visuelle (58).

9. Procédé (70) selon une quelconque revendication précédente, dans lequel le positionnement (74) de l'outil d'inspection de défaut (50) contre le défaut (20) comprend l'application d'une première extrémité (52a) du réseau de broches (52) sur la pale d'éolienne (10) pour couvrir le défaut (20) afin d'amener une seconde extrémité (52b) du réseau de broches (52), opposée à la première extrémité (52a), à définir le contour (56) décrit par les broches déplacées (52).

10. Procédé (70) selon une quelconque revendication précédente, dans lequel le défaut (20) est au moins l'un parmi une ride, un froncement, un pli, une nervure et une rainure.

11. Procédé (70) selon une quelconque revendication précédente, dans lequel le défaut (20) se trouve sur la surface (22) d'une paroi de la pale d'éolienne (10).
